# FASCICULE DE BREVET EUROPEEN

(11) **EP 2 232 816 B1**
(45) Date de publication et mention de la délivrance du brevet: **08.03.2017**
(21) Numéro de dépôt: 08864897.7
(22) Date de dépôt: 05.12.2008
(51) Int. Cl.: H04L 29/06, H04M 7/00, H04B 7/26, H04W 48/18, H04W 36/00, H04W 88/04

(54) **GESTION D'UNE COMMUNICATION DANS UN RESEAU HETEROGENE**
STEUERUNG DER KOMMUNIKATION IN EINEM HETEROGENEN NETZWERK
MANAGEMENT OF A COMMUNICATION IN A HETEROGENEOUS NETWORK

(30) Priorité: 17.12.2007 FR 0759907
(43) Date de publication de la demande: 29.09.2010
(73) Titulaire: Orange, 75015 Paris (FR)
(72) Inventeur: JAVAID, Usman, Newbury RG141JL (GB); MEDDOUR, Djamal-Eddine, F-22300 Lannion (FR); AHMED, Toufik, F-33400 Talence (FR)
(74) Mandataire: Cabinet Plasseraud
(86) Numéro de dépôt international: PCT/FR2008/052227
(87) Numéro de publication internationale: WO 2009/080959

(56) Documents cités:
- WO-A-2006/125085
- US-A1- 2007 264 995

## Description

La présente invention concerne un réseau de communications comprenant une pluralité de sous-réseaux, et plus particulièrement un réseau hétérogène, c'est-à-dire un réseau comprenant des sous réseaux accessibles selon des technologies différentes. Notamment, l'invention concerne la gestion d'un transfert de communication d'un terminal depuis un sous réseau vers un autre au sein d'un tel réseau.

Un exemple se trouve dans US2007/264995.

Il est de plus en plus important de pouvoir offrir aux utilisateurs d'un réseau de communication une qualité de service adaptée tout en permettant une mobilité en cours de communication.

A cet effet, le comité de l'IEEE (pour 'Institute of Electrical and Electronics Engineer'), et plus particulièrement l'entité IEEE 802.21, propose un réseau de communication adapté pour gérer un transfert automatique des communications depuis un sous réseau vers un autre sous réseau du réseau hétérogène considéré, indépendamment du média utilisé. Une telle gestion est référencée en anglais 'Media Independent Handover (MIH)'.

Une fonction MIH permet de gérer, pour une communication établie, un transfert depuis un sous-réseau fonctionnant selon une première technologie d'accès (couche 2 du modèle OSI) vers un sous-réseau fonctionnant selon une autre technologie d'accès, de sorte à offrir une mobilité de l'utilisateur au sein d'un réseau hétérogène.

Ainsi, un terminal ayant une session IP (en anglais 'Internet Protocol') établie par exemple via un point d'accès réseau de type Wi-Fi peut être amené à être transféré vers un point d'accès réseau de type GSM (pour 'Global System for Mobile Communication'), soit parce que le terminal est en cours de déplacement et le point d'accès Wi-Fi n'est plus adapté à la nouvelle localisation du terminal (i.e. le terminal sort de la zone de couverture du point d'accès Wi Fi), soit encore parce que la communication initiale de type Wi-Fi rencontre des problèmes de transmission (i.e. la qualité de service ne peut plus être assurée).

Cette fonction MIH est plus précisément positionnée entre une couche de niveau 2, selon le modèle OSI (pour 'Open Systems Interconnection'), de la pile protocolaire de communication sans fil et une couche de niveau 3 selon le modèle OSI, de la pile protocolaire de communication IP. Elle peut donc correspondre à une couche de niveau 2,5 située entre la couche de réseau et la couche de liaison du modèle OSI.

Il est notamment prévu que la fonction MIH soit capable de communiquer avec différents protocoles de type IP, comme 'SIP' (pour 'Session Initiation Protocol') pour la signalisation, comme 'Mobile IP' pour la gestion de la mobilité, ou encore comme 'Diffserv' et 'IntServ' pour la gestion de la qualité de service, ou QoS.

Toutefois, une telle fonction MIH est conçue pour les connectivités de type client-réseau. Il en résulte que le transfert de communication depuis un sous réseau, vers un autre sous réseau est limité par la technologie associée à chacun des points d'accès des sous réseaux, ainsi que par les ressources qui sont associées aux sous réseaux de chacun de ces points d'accès.

Plus précisément, dans une telle architecture, un terminal ne peut avoir accès qu'aux sous réseaux du réseau hétérogène dont les points d'accès sont susceptibles de fournir un accès au terminal, c'est-à-dire les points d'accès dans la zone de couverture desquels se situe le terminal et qui en outre proposent une technologie d'accès compatible avec les capacités d'accès du terminal considéré.

Par conséquent, dans de telles conditions, l'utilisation d'un réseau hétérogène n'est pas toujours optimale.

La présente invention vient améliorer la situation, en introduisant plus de flexibilité dans le transfert de technologie au cours d'une communication établie dans un réseau hétérogène et en permettant ainsi une utilisation plus optimale des ressources offertes dans l'ensemble de ce réseau. Dans ces conditions, il est également possible d'accroître le niveau de QoS d'une communication.

Un premier aspect de la présente invention propose un procédé de gestion d'une communication d'un premier terminal dans un réseau de communication comprenant des sous-réseaux;
ledit premier terminal pouvant communiquer avec au moins un second terminal ;
au moins un sous réseau du réseau étant accessible via ledit second terminal ; ledit procédé comprenant les étapes suivantes au niveau du premier terminal :
/a/ recevoir depuis le second terminal, des informations relatives à des ressources dudit sous réseau accessible via le second terminal ; et
/b/ sélectionner, sur la base desdites informations, un sous-réseau pour la communication du premier terminal parmi un ensemble de sous réseaux du réseau comprenant au moins ledit sous réseau accessible via le second terminal.

La présente invention peut avantageusement être appliquée dans le cas où le réseau considéré est un réseau hétérogène, c'est-à-dire un réseau comprenant plusieurs sous réseaux qui peuvent être de technologies d'accès et de transmission différentes (par exemple un sous-réseau selon une technologie filaire, et un sous-réseau selon une technologie sans-fil). Un réseau hétérogène peut donc offrir différents types de communication à un terminal. En outre, à un instant donné, selon l'utilisation des ressources de transmission de chacun des sous réseaux du réseau hétérogène, ces sous réseaux peuvent offrir des niveaux de qualité de service différents.

On entend ici par les termes 'sous réseau accessible via le second terminal' le fait que le second terminal a un accès direct au sous réseau considéré, c'est-à-dire que ce second terminal se trouve dans la zone de couverture de ce sous réseau. L'accessibilité évoquée ici ne fait donc pas intervenir de terminal proxy au sens de la présente invention.

On peut donc offrir ici une grande flexibilité d'accès à un terminal.

Toutefois, il est possible que le terminal ait un accès direct à un sous réseau qui ne lui offre qu'une communication présentant un faible niveau de qualité de service, et qu'aucun autre accès direct disponible ne soit satisfaisant au regard de la communication en cours, bien que, au sein du réseau, il y ait d'autres sous réseaux en mesure de lui offrir un niveau de qualité de service satisfaisant. Dans une architecture de l'art antérieur, le terminal se contente alors du niveau de qualité de service que lui offre le seul sous réseau qui lui est directement accessible.

Grâce aux caractéristiques énoncées dans le procédé de gestion ci-dessus, il est possible d'optimiser le service offert par un tel réseau, en proposant au terminal considéré un ou plusieurs accès au réseau via un ou plusieurs autres sous réseaux déjà reliés à ce second terminal. Dans le cas où ce premier terminal peut communiquer avec une pluralité d'autres terminaux, chacun de ces terminaux ayant accès à au moins un sous réseau du réseau, le premier terminal peut avantageusement sélectionner celui des sous réseaux ainsi accessible via l'intermédiaire d'au moins un autre terminal, qui est le plus adapté aux contraintes de la communication considérée.

Ainsi, le second terminal ci-dessus énoncé a un rôle de mandataire, ou encore de 'proxy' en anglais, pour le premier terminal considéré. Ce second terminal est avantageusement en mesure de proposer un accès à un ou plusieurs sous réseaux du réseau. Cet accès peut d'ailleurs être offert via un ou plusieurs autres terminaux qui permettent alors au premier terminal de communiquer avec le second terminal.

Dans une telle architecture, on est alors en mesure d'optimiser l'utilisation des ressources d'un réseau hétérogène en augmentant la flexibilité d'accès à ce réseau, tout en prenant en considération le niveau de qualité de service de la communication gérée. On est en outre en mesure de proposer plus de flexibilité d'accès au premier terminal, notamment lorsque ce dernier n'est pas adapté pour communiquer selon toutes les technologies des sous réseaux du réseau hétérogène.

Dans une telle architecture, le second terminal peut détecter que la communication du premier terminal peut avantageusement être mise en oeuvre via un ou plusieurs autres sous réseaux qui sont accessibles par l'intermédiaire de ce second terminal.

Ainsi, dans ces conditions, non seulement le premier terminal est en mesure d'accéder à un sous réseau via le second terminal sans lequel cet accès serait impossible, ou tout au moins dans des conditions de qualité inférieure, mais en outre, ce second terminal peut lui offrir un accès à un ensemble de sous réseaux différents au sein du réseau considéré. Cette flexibilité permet une utilisation optimale des ressources offertes dans un réseau notamment hétérogène.

Ainsi, le second terminal, ou terminal proxy, est adapté pour gérer et donc fournir au premier terminal des informations relatives à un ensemble de sous réseaux auxquels il a un accès. Ainsi, contrairement à l'architecture antérieure, il est ici possible d'offrir au premier terminal un choix d'accès à différents sous réseaux de manière centralisée au niveau du second terminal, ou terminal proxy, qui lui peut disposer d'une vision plus globale sur le réseau que la vision de chacun des sous réseaux individuellement.

L'accès à ce type d'informations relatives aux ressources des différents sous réseaux accessibles via le second terminal permet une utilisation optimale des ressources du réseau au regard d'une communication donnée.

Les caractéristiques énoncées ci-dessus, au regard du procédé de gestion selon un mode de réalisation de la présente invention, permettent de gérer soit un établissement de communication du premier terminal, soit encore un transfert de communication depuis un premier sous réseau vers un second sous réseau dans le réseau.

Le premier terminal peut aussi communiquer avec le second terminal via au moins un troisième terminal, des informations échangées entre les premier et second terminaux transitant via au moins le troisième terminal.

On peut ainsi avantageusement prévoir que le premier terminal soit éloigné du second terminal mais que, même dans ces conditions, il puisse avantageusement utiliser le second terminal en tant que proxy en communiquant avec lui par l'intermédiaire d'un ou plusieurs autres terminaux.

Dans un mode de réalisation de la présente invention, l'ensemble de sous réseaux comprend un premier sous ensemble de sous réseaux accessibles via le second terminal et un second sous ensemble de sous réseaux accessibles directement par le premier terminal ; et les informations reçues par le premier terminal à l'étape /a/ sont relatives aux ressources du premier sous ensemble. Alors, le procédé comprend en outre l'étape suivante entre l'étape /a/ et l'étape /b/, au niveau du premier terminal :
- recevoir depuis le second sous ensemble, d'autres informations relatives à des ressources de transmission des sous réseaux du second sous ensemble,
dans lequel l'étape /b/ est effectuée sur la base en outre desdites autres informations.

Ainsi, avant d'effectuer un transfert d'une communication déjà établie ou encore avant d'établir la communication du premier terminal initialement, le terminal peut prendre en compte des informations relatives aux ressources de transmission du ou des sous réseaux qui lui sont accessibles via le second terminal, ainsi que des ressources de transmission du ou des sous réseaux qui sont accessibles directement depuis le premier terminal. Cette flexibilité dans l'accès au réseau ainsi proposé permet d'accroître le niveau de qualité de service qui est attaché à la communication du premier terminal, qu'il s'agisse à ce stade d'une communication déjà établie ou d'une communication à établir pour le premier terminal.

Dans le cas où la communication du premier terminal n'est pas encore établie, elle peut l'être selon un mode de réalisation de l'invention, via le sous-réseau sélectionné, que ce sous réseau soit directement accessible par le premier terminal ou indirectement via le second terminal.

Dans le cas où, un premier sous réseau étant accessible par le premier terminal, la communication est établie depuis le premier terminal par ce premier sous réseau ;
ledit procédé peut en outre comprendre les étapes suivantes, avant l'étape /a/, au niveau du premier terminal :
/1/ recevoir, depuis le second terminal, un message indiquant la possibilité d'une communication entre les premier et second terminaux ;
/2/ requérir auprès du second terminal, des informations relatives à des ressources du au moins un sous réseau accessible via le second terminal; et l'étape suivante après l'étape /b/ :
/3/ transférer la communication du premier terminal depuis le premier sous réseau vers le sous réseau sélectionné.

Ici, avantageusement, alors que la communication du premier terminal est déjà établie et transite par un premier sous réseau, le premier terminal est informé du fait que cette communication peut être poursuivie via le second terminal de manière à transiter par un second sous réseau. A ce stade, il peut alors requérir des informations relatives aux ressources du réseau. Il peut aussi ici en outre requérir, auprès du premier sous réseau, des informations relatives aux ressources du second sous réseau.

Ensuite, sur la base des informations relatives aux ressources des différents sous réseaux qui sont offertes pour poursuivre sa communication, une décision de transfert de la communication peut alors être prise, afin d'augmenter la qualité de cette communication.

Dans un mode de réalisation de la présente invention, la communication est établie depuis le premier terminal via le second terminal par le au moins un sous réseau accessible via le second terminal,
ledit procédé comprenant les étapes suivantes au niveau du premier terminal :
/4/ recevoir, depuis le premier sous réseau, un message indiquant la possibilité d'une communication entre le premier terminal et le premier sous réseau ; et
/5/ requérir auprès du premier sous réseau, des informations relatives à des ressources du premier sous réseau ;
dans lequel on décide de transférer la communication du premier terminal depuis le second sous réseau vers le premier sous réseau sur la base des informations requises à l'étape /5/.

Ainsi, avantageusement, il est prévu de pouvoir basculer une communication depuis un second sous réseau accessible via un terminal proxy vers un premier sous réseau qui lui est accessible directement, c'est-à-dire sans avoir recours à un terminal intermédiaire permettant l'accès réseau considéré.

Les informations relatives aux ressources de transmission peuvent indiquer un type d'accès ou une valeur de débit ou un niveau de charge relativement au sous réseau correspondant.

Avantageusement, les informations relatives à des ressources du au moins un sous réseau accessible via le second terminal sont stockées au niveau du second terminal.

Une telle caractéristique permet à un terminal proxy selon un mode de réalisation une grande réactivité dans le traitement des requêtes reçues par le ou les autres terminaux. En effet, ainsi, le terminal proxy n'a pas besoin de requérir ces informations relatives aux ressources auprès du ou des sous réseaux auquel il a accès avant d'en informer les autres terminaux.

Un deuxième aspect de la présente invention propose un procédé correspondant à celui du premier aspect mis en oeuvre au niveau d'un terminal de type proxy.

Ainsi, il est proposé un procédé de gestion d'une communication d'un premier terminal dans un réseau de communication comprenant des sous-réseaux ;
ledit premier terminal pouvant communiquer avec au moins un second terminal ;
au moins un sous réseau étant accessible via ledit second terminal ;
ledit procédé de gestion comprenant les étapes suivantes au niveau du second terminal :
/a/ recevoir une requête depuis le premier terminal demandant des informations relatives à des ressources du au moins un sous réseau accessible via le second terminal ;
/b/ répondre en transmettant au premier terminal lesdites informations relatives aux ressources du au moins un sous réseau accessible.

On peut en outre prévoir les étapes suivantes avant l'étape /a/ :
/1/ détecter la possibilité d'une communication avec le premier terminal ;
/2/ informer le premier terminal de ladite possibilité de communication.

Dans un mode de réalisation de la présente invention, on peut prévoir que le premier terminal communique avec le second terminal via au moins un troisième terminal, des informations échangées entre les premier et second terminaux transitant via au moins le troisième terminal.

Un tel procédé peut en outre comprendre les étapes suivantes au niveau du second terminal :
/i/ recevoir depuis le premier terminal une requête d'établissement d'une communication dans le au moins un sous réseau accessible ;
/ii/ gérer l'établissement de la communication du premier terminal dans le au moins un sous réseau accessible via le second terminal.

Le second terminal peut avantageusement mettre à jour les informations relatives aux ressources du au moins un sous réseau accessible sur la base de messages reçus depuis le au moins un sous réseau accessible.

Le second terminal peut avantageusement stocker localement des informations relatives à des ressources du au moins un sous réseau accessible.

Un troisième aspect de la présente invention propose un terminal dans un réseau de communication comprenant des sous-réseaux ;
ledit terminal pouvant communiquer avec au moins un autre terminal ;
au moins un sous réseau étant accessible via ledit autre terminal ;
ledit terminal comprenant :
- une entité de réception adaptée pour recevoir depuis l'autre terminal, des informations relatives à des ressources dudit sous réseau accessible via l'autre terminal; et
- une entité de sélection adaptée pour sélectionner, sur la base desdites informations, un sous-réseau pour une communication parmi un ensemble de sous réseaux comprenant au moins ledit sous réseau accessible via l'autre terminal.

Un quatrième aspect de la présente invention propose un terminal de type proxy. Ce terminal est adapté pour un réseau de communication (10) comprenant des sous-réseaux (M,N) ;
ledit terminal pouvant communiquer avec au moins un autre terminal ;
au moins un sous réseau (M) étant accessible via ledit terminal ;
ledit terminal comprenant :
- une entité de réception adaptée pour recevoir une requête depuis l'autre terminal demandant des informations relatives à des ressources du au moins un sous réseau accessible;
- une entité d'émission adaptée pour répondre en transmettant à l'autre terminal lesdites informations relatives aux ressources du au moins un sous réseau accessible.

Ce terminal peut en outre comprendre :
- une entité de détection adaptée pour détecter la possibilité d'une communication avec l'autre terminal ; et
dans lequel l'entité d'émission est adaptée pour informer l'autre terminal de ladite possibilité de communication.

Il peut aussi comprendre une entité de stockage adaptée pour stocker des informations relatives à des ressources du au moins un sous réseau accessible.

Les informations stockées dans l'entité de stockage peuvent être mises à jour sur la base de messages reçus depuis le au moins un sous réseau accessible au niveau de l'entité de réception.

Un cinquième aspect de la présente invention propose un réseau comprenant des sous réseaux ; un premier terminal selon le troisième aspect de la présente invention et un second terminal selon le quatrième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :
- les figures 1-A et 1-B illustrent un réseau hétérogène selon un mode de réalisation de la présente invention ;
- la figure 2 illustre une pile protocolaire d'un terminal selon un mode de réalisation de la présente invention ;
- la figure 3 illustre une architecture réseau au regard des piles protocolaires selon un mode de réalisation de la présente invention ;
- la figure 4 illustre un échange de messages selon un mode de réalisation de la présente invention au cours duquel un transfert de lien est mis en oeuvre vers une communication par terminal proxy ;
- la figure 5 illustre un échange de messages selon un mode de réalisation de la présente invention au cours duquel un transfert de lien est mis en oeuvre vers une communication directe ;
- La figure 6 illustre un terminal selon un mode de réalisation de la présente invention ; et
- La figure 7 illustre un terminal selon un mode de réalisation de la présente invention.

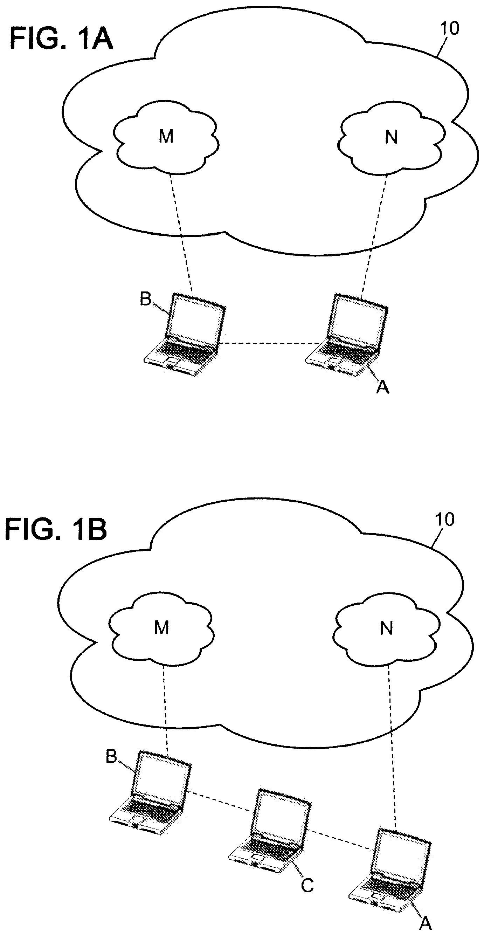

La figure 1-A illustre un réseau selon un mode de réalisation de la présente invention. Un tel réseau 10 comprend un premier sous réseau N et un second sous réseau M. Ce réseau 10 offre un service de communication à une pluralité de terminaux, seuls des terminaux A et B étant illustrés. Le terminal A peut potentiellement avoir une communication soit directement via le sous réseau N, soit via le sous réseau M par l'intermédiaire du terminal B qui opère pour lui en tant que terminal proxy. Les sous-réseaux N et M peuvent être des sous-réseaux de même technologie d'accès (par exemple deux sous-réseaux Wi-Fi) ou des sous-réseaux de technologies différentes (par exemple un réseau Wi-Fi et un réseau UMTS).

La figure 1-B illustre un réseau selon un mode de réalisation de la présente invention, dans lequel le terminal A peut potentiellement avoir une communication soit directement via le sous réseau N, soit via le sous réseau M par l'intermédiaire à la fois du terminal B et du terminal C.

De manière plus générale, aucune limitation n'est attachée au nombre de terminaux intermédiaires, comme le terminal C, qui peuvent permettre aux terminaux A et B de communiquer entre eux, afin que le terminal B puisse opérer en tant que terminal proxy pour le terminal A.

Par la suite, à titre illustratif, la présente invention est décrite dans son application à un réseau hétérogène de type MIH selon la norme 802.21 de l'IEEE.

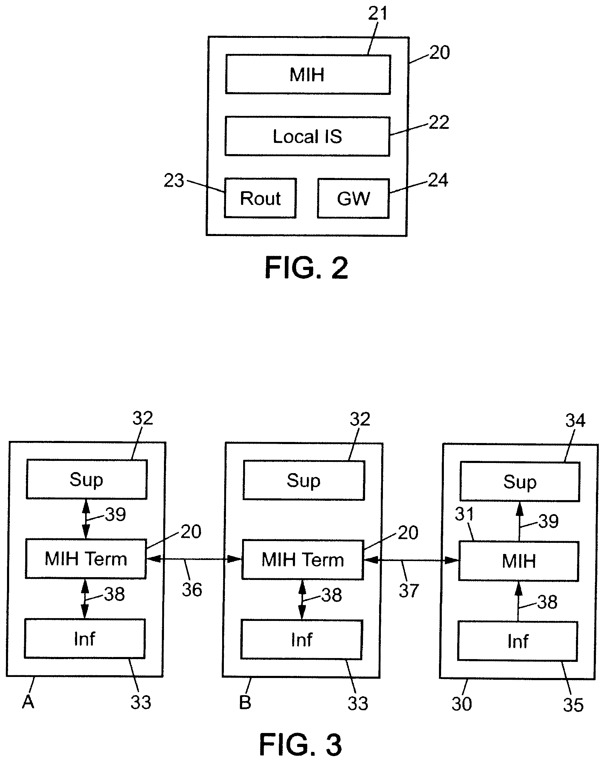

La figure 2 illustre une partie 20 de la pile protocolaire dont dispose un terminal selon un mode de réalisation de la présente invention. Cette partie 20 peut correspondre à une fonction MIH spécifique pour les terminaux, référencée ci-après 'MIH Term', dans le contexte d'un réseau hétérogène basé sur la fonction MIH telle que définie par la norme 802.21 de l'IEEE.

Cette partie 20 de pile protocolaire comprend une couche 21 qui peut être similaire à la fonction MIH telle que définie par la norme 802.21 de l'IEEE, une couche 22 'Local IS' pour 'Local Information Service', et deux couches de niveau équivalent, une couche 23 de routage et une couche 24 de détection de passerelle.

La couche LIS 22 est une couche qui comprend des informations relatives à un environnement multi sauts du terminal considéré, c'est-à-dire à la possibilité offerte selon un mode de réalisation de la présente invention de communiquer depuis un terminal via un autre terminal.

Dans un mode de réalisation de la présente invention, cette couche 22 est incluse dans la pile protocolaire d'un terminal, que ce dernier ait un rôle de mandataire ou bien que ce dernier soit à la recherche d'un accès réseau. On peut prévoir qu'au moins une partie des terminaux du réseau hétérogène puissent à la fois être adaptés pour un rôle de mandataire et pour utiliser le service d'un terminal mandataire. Toutefois, il peut aussi être avantageux de prévoir un type de terminal qui est adapté pour utiliser le service de mandataire offert par un terminal proxy selon un mode de réalisation de la présente invention, sans pour autant être adapté pour jouer lui-même un rôle de proxy. Aucune limitation n'est attachée à la présente invention au regard de cet aspect.

Ainsi, au niveau d'un terminal opérant en tant que terminal proxy, cette couche 22 est adaptée pour fournir des informations relatives aux sous réseaux du réseau hétérogène qui sont accessibles par le terminal proxy (mais qui éventuellement ne sont pas directement accessibles par un autre terminal).

Au niveau d'un terminal cherchant à utiliser un terminal proxy pour accéder au réseau hétérogène, cette couche 22 est adaptée pour stocker des informations relatives aux sous réseaux du réseau hétérogène qui sont accessibles par le ou les terminaux proxy avec lesquels le terminal considéré peut communiquer.

Les informations stockées au sein de cette couche 22 peuvent être les suivantes :
- le type du point d'accès ou des points d'accès qui sont accessibles depuis le terminal considéré via un terminal proxy ;
- le débit qui est offert dans le ou les sous réseaux accessibles via un terminal proxy, par le ou les points d'accès respectifs ;
- la charge qui est effective dans le ou les sous réseaux accessibles via un terminal proxy, par le ou les points d'accès respectifs.

Aucune limitation n'est attachée au type de ces informations stockées dans cette couche LIS 22, dans le contexte de la présente invention.

Le type de ces informations peut bien entendu dépendre du type du ou des sous réseaux auxquelles elles sont relatives. Ainsi, lorsque le sous réseau est de type GSM (pour 'Global System for Mobile communications'), un identifiant de la cellule, ou encore cell-ID à laquelle le terminal proxy a accès, peut être avantageusement stockée dans cette couche.

Dans le cas d'un sous réseau selon la norme 802.11 telle que définie par l'IEEE, une information relative au SSID, pour 'Service Set Identifier' en anglais, peut de manière similaire être stockée dans cette couche. Il en est de même pour un sous réseau selon la norme 802.16 telle que définie par l'IEEE, relativement à l'information de BSID, pour 'Base Station Identifier' en anglais.

Ces informations peuvent être obtenues depuis une couche GIS (pour 'Global Information Service') qui est comprise dans la pile protocolaire prévue au niveau des entités de réseau par la norme IEEE 802.21, ou encore au niveau des points d'accès aux sous réseaux du réseau hétérogène considéré.

Ainsi, lorsqu'un terminal selon un mode de réalisation de la présente invention est en mesure de communiquer avec une entité réseau, comme une station de base ou un point d'accès d'un sous réseau du réseau hétérogène, il peut être prévu que le terminal reçoive depuis cette entité réseau des informations relatives aux ressources du sous réseau correspondant afin de stocker localement ces informations dans la couche LIS 22. Après une telle étape, ce terminal dispose d'une couche LIS 22 mise à jour et peut jouer un rôle de proxy pour un autre terminal qui serait en mesure de communiquer avec lui.

Dans un mode de réalisation de la présente invention, lorsque ce terminal détecte qu'il est en mesure de communiquer avec un autre terminal, il en informe ce dernier afin de lui proposer un service de proxy pour un accès au réseau hétérogène. Ensuite, cet autre terminal peut alors décider de requérir plus d'informations pour décider ou non d'utiliser ce terminal en tant que proxy.

La couche 23 de routage a en charge la détection de routes entre les terminaux accédant au réseau hétérogène 10, puis l'établissement de ces routes détectées.

Aucune limitation n'est attachée au type de ces routes au regard de la présente invention. Ainsi, il est possible de prévoir qu'une telle route puisse être basée sur un premier type d'interface entre un terminal A de la communication et le premier terminal auquel il est relié, puis elle peut être basée sur un second type d'interface entre le premier terminal et le terminal suivant, jusqu'au terminal proxy ayant accès à un sous réseau. Le premier type d'interface et le second type d'interface peuvent être identiques, comme par exemple une interface de type Wi Fi, ou différents, comme par exemple une première interface de type Wi Fi et une seconde interface de type Bluetooth.

La couche 24 de détection de passerelle a en charge de détecter des routes à sauts multiples, c'est-à-dire des routes entre un terminal et un sous réseau du réseau hétérogène qui permettent par la suite d'offrir un accès à un autre terminal par une route à sauts multiples. Cette couche 24 permet une interface entre la couche 22 LIS de la partie 20 'MIH term' et la couche GIS de la partie MIH d'une entité réseau, telle que, par exemple, une station de base ou un point d'accès réseau selon le type de technologie utilisée dans le sous réseau correspondant. Cette couche a également en charge l'établissement de bout-en-bout d'une telle route à sauts multiples.

Il est aussi possible de prévoir de réunir ces deux couches en une seule, la couche 24 de détection de passerelle pouvant alors être considérée comme une partie de la couche 23 de routage.

La figure 3 illustre une architecture réseau au regard des piles protocolaires selon un mode de réalisation de la présente invention.

Sur cette figure 3, les terminaux A et B, ainsi qu'une entité réseau 30, sont illustrés sous la forme de leurs piles protocolaires respectives.

Dans l'exemple illustré ici, on considère que le terminal A a accès au sous réseau M par l'entité réseau 30 via le terminal B qui joue donc pour le terminal A un rôle de mandataire. Le terminal B ne fait pas partie de l'infrastructure du sous-réseau M, et n'est donc pas un PoA/PoS (pour 'Point of Attachment/Point of Service') au sens de la norme 802.21.

Du côté des terminaux A et B, la pile protocolaire comprend des couches de niveau inférieur 'Inf' 33, au-dessus desquelles est située la partie de couche protocolaire 20 'MIH Term', au-dessus de laquelle sont encore positionnées des couches supérieures 'Sup' 32.

Du côté de l'entité réseau 30, la pile protocolaire comprend des couches de niveau inférieur 'Inf' 35 au-dessus desquelles une couche MIH 31, au dessus de laquelle des couches supérieures 'sur' 34.

Dans le contexte d'un réseau hétérogène de type MIH, il est prévu d'utiliser des messages de services, ou de services MI (pour 'Media Independent'), qui sont de différents types comme les suivants :
- de type évènement ('Event' en anglais) ; et
- de type commande ('Command' en anglais).

Les informations échangées dans les messages de type 'Event' sont notamment utilisées pour la gestion d'un changement d'état d'un lien pour une communication entre un terminal et un sous réseau, comme la perte d'un lien 'Link Down', la détection d'un lien 'Link Up', ou la dégradation d'un lien 'Link Going Down'. Dans le contexte de la présente invention, on peut avantageusement prévoir d'échanger ces informations pour la gestion d'un changement d'état d'un lien pour une communication entre deux terminaux.

Les informations échangées dans les messages de type 'Command' sont notamment utilisées pour contrôler un transfert de lien 'Switch', pour requérir un état 'Get Status', ou encore pour la configuration d'un lien 'Configure' ou la configuration de valeur seuil relativement aux évènements liés aux liens 'Configure Threshold'.

Des informations relatives aux évènements de service peuvent être reçues depuis la couche Inf 33, par la partie de pile protocolaire 20 selon une transmission 38, puis depuis cette partie MIH Term, ces informations peuvent être transmises aux couches Sup 32 selon une transmission 39 et à une partie 20 d'un autre terminal selon une transmission 36.

Sur la base de tels évènements de service échangés avec un second terminal, un premier terminal peut décider de manière autonome d'effectuer un transfert de sous réseau pour sa communication, ou encore il peut sélectionner le cas échéant un sous réseau utilisé pour initier une communication parmi tous les sous réseaux qui lui sont accessibles soit directement soit via un second terminal qui joue alors un rôle de proxy pour lui.

Aucune limitation n'est attachée au nombre de terminaux proxy potentiels qui peuvent permettre à ce premier terminal d'accéder à un sous réseau du réseau hétérogène 10. En effet, on peut prévoir que le premier terminal reçoive depuis tous les terminaux qui peuvent jouer un rôle de proxy et avec lesquels une communication est possible, des informations relatives aux ressources des sous réseaux auxquels ils ont respectivement accès.

Dans une architecture selon un mode de réalisation de la présente invention, les informations des messages de type 'Event' peuvent avantageusement transiter depuis le terminal A via la partie de couche protocolaire 20 du terminal proxy B de façon à être acheminées jusqu'à une couche MIH 31 de l'entité réseau 30, via les transmissions 36 et 37 successivement.

Des informations des messages de type 'Command' peuvent être reçues depuis la couche Sup 32, par la partie de pile protocolaire 20 selon une transmission 39, puis depuis cette partie MIH Term 20, ces informations peuvent être transmises aux couches Inf 33 selon la transmission 38 et à une partie 20 d'un autre terminal selon une transmission 36.

Sur la base de telles informations de type 'Command', un terminal peut déterminer l'état d'un lien, il peut contrôler un transfert de lien ou encore contrôler un terminal multi mode, c'est-à-dire un terminal qui est adapté pour gérer différentes technologies de communication, comme par exemple une technologie de type Wi FI ou encore une technologie de type Bluetooth.

Via la partie 20 de couche protocolaire du terminal B, agissant ici en terminal proxy, le terminal A et l'entité réseau sont en mesure de s'échanger une commande soit depuis l'entité réseau vers le terminal A, soit depuis le terminal A vers l'entité réseau.

Dans un tel contexte, il est possible de localiser la prise de décision d'un transfert de lien au niveau du terminal ou au niveau d'un sous réseau. Dans ce dernier cas, une commande de transfert de lien peut être transmise depuis une entité réseau vers le terminal A soit directement, soit via le terminal B.

On peut ici avantageusement prévoir que la transmission bidirectionnelle 36 puisse être utilisée pour l'échange d'informations seulement entre le terminal A et le terminal B afin d'optimiser certaines fonctions.

Ainsi, par exemple, on peut prévoir que le terminal A envoie un message de type 'Command' au terminal B pour requérir une communication de type vidéo demandant un certain niveau de qualité de service. Ainsi, même si le terminal B n'est pas en mesure de lui offrir, en tant que terminal proxy, une route permettant un tel niveau de qualité de service, il prend en compte cette requête afin de pouvoir notifier au terminal A la détection d'une route qui pourrait lui convenir dès que possible. Ainsi, le terminal B stocke ce type de requêtes pour le terminal A et l'informe dès que cette requête peut être satisfaite en lui envoyant un message. Sur réception de ce dernier message, le terminal A peut ensuite décider de mettre en oeuvre sa communication de type vidéo via le terminal B ou non.

Par ailleurs, on peut également prévoir avantageusement que, lorsqu'une communication est établie depuis le terminal A via le terminal B en tant que terminal proxy, le terminal A informe le terminal B lorsqu'il ne souhaite plus utiliser la route de communication via le terminal B. Ainsi, le terminal peut optimiser l'offre de ses ressources pour d'éventuelles autres communications par son intermédiaire.

Des informations échangées de type 'information' sont notamment utilisées en tant qu'informations requises pour décider un transfert de lien. Ces informations échangées entre les terminaux et les entités de réseau sont telles qu'elles permettent à ces terminaux et entités réseau d'acquérir une vision globale du réseau hétérogène afin d'optimiser ainsi une décision de transfert de lien dans ce type de réseau.

Plus précisément, dans un mode de réalisation de la présente invention, par l'échange de messages du type 'Information Request' et 'Information Response' entre le terminal A et le terminal B, le terminal A peut obtenir depuis le terminal B des informations sur les sous réseaux auxquels il a accès, comme par exemple la liste de ces sous réseaux, la carte des sous réseaux voisins, ainsi que des informations sur les entités réseau de ces différents sous réseaux. Ces échanges de messages peuvent être relatifs à une adresse d'un point d'accès, ou ils peuvent être relatifs à un débit, ou encore à des renseignements spécifiques de constructeurs.

Ce type d'information est stocké dans la couche Global Information Service, ou GIS d'une entité réseau selon la norme IEEE 802.21.

La couche LIS 22 fait partie de la partie 20 de la pile protocolaire destinée aux terminaux selon un mode de réalisation de la présente invention et permet à deux terminaux d'échanger entre eux des informations qui sont stockées de manière locale aux terminaux respectivement.

On peut prévoir que les informations entre la couche GIS d'une entité réseau et la couche LIS d'un terminal, ou entre deux couches LIS de deux terminaux respectifs, sont échangées via un message de type 'HELLO' qui est défini au niveau 3 selon le modèle OSI, dans le document "Optimized link state routing protocol," de P. Jacquet and T. Clausen, Internet RFC 3626, 2004. On peut aussi prévoir que ces informations sont échangées via un message de balise tel que défini au niveau 2 selon le modèle OSI, ou encore en utilisant un message ou plusieurs messages tels que définis par un protocole de routage adapté pour une communication sans fil entre terminaux, c'est-à-dire adapté à un réseau ad-hoc. Les informations de la couche LIS sont stockées au niveau du terminal et partagées avec d'autres terminaux, de préférence sur requête.

Au niveau d'un terminal donné, ces informations LIS peuvent correspondre notamment à une liste de sous réseaux accessibles soit directement soit via un terminal proxy, une topologie relative à la localisation des terminaux voisins, c'est-à-dire des terminaux avec lesquels le terminal donné peut communiquer, un niveau de QoS qui peut être offert dans les sous réseaux listés. Aucune limitation n'est attachée à la présente invention au regard de la liste des informations stockées au niveau de couche LIS.

Cette couche LIS permet avantageusement à un terminal de jouer un rôle de proxy pour permettre à un autre terminal de se connecter à un sous réseau auquel il n'a pas accès directement, parce qu'il n'a aucun accès direct à un sous réseau du réseau hétérogène, ou encore par exemple parce que le ou les sous réseaux auxquels il a accès propose un niveau de QoS inférieur ou même insuffisant pour sa communication à venir, soit à l'établissement soit en cours de communication, c'est-à-dire dans le contexte d'un transfert de lien.

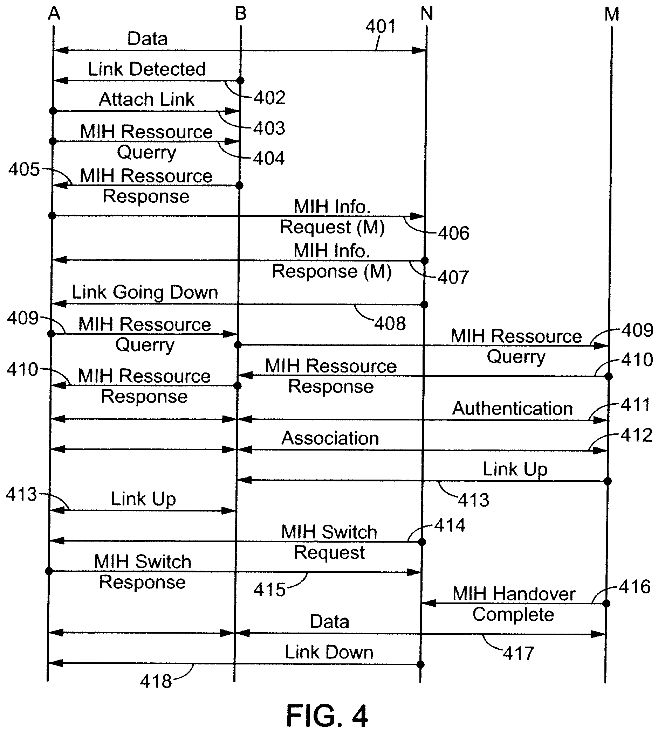

La figure 4 illustre un échange de messages selon un mode de réalisation de la présente invention au cours duquel un transfert de lien est mis en oeuvre vers une communication par terminal proxy. Dans le scénario tel qu'illustré ici, une communication 401 est établie entre le terminal A et le sous réseau N, cette communication étant directe c'est-à-dire ne transitant pas via un terminal proxy.

Le terminal B est adapté pour détecter à la fois la possibilité de communiquer avec une entité réseau d'un sous réseau du réseau hétérogène et la possibilité de communiquer avec un autre terminal de ce réseau hétérogène.

La possibilité de communiquer avec le terminal A est ici détectée au niveau du terminal B et par conséquent, le terminal B émet un message de type 'Lien détecté' (ou encore 'Link Detected') 402 à destination du terminal A. Cet évènement peut se produire par exemple dans le cas où le terminal A et/ou le terminal B sont en mouvement, soit encore dans le cas où le contexte radio entre ces deux terminaux a été modifié pour une quelconque raison.

Sur réception de ce message, le terminal A répond par l'envoi d'un message 'Attach Link' 403 suivi d'un message 'MIH Resource Querry' 404 à destination du terminal B. Ce dernier message vise à requérir auprès de ce terminal B des informations relatives aux ressources du ou des sous réseaux auxquels le terminal B a accès.

Le terminal B récupère alors les informations stockées dans sa partie de couche protocolaire 20, et les transmet au terminal A par l'émission d'un message 405 'MIH Resource Response'.

Dans cet exemple, le terminal B a accès au sous réseau M. Si ce terminal B avait accès à une pluralité de sous réseaux du réseau hétérogène, ce message 405 pourrait avantageusement contenir alors des informations relatives à tous ces sous réseaux accessibles pour lui.

Afin de compléter les informations reçues dans le message 405 relativement au sous réseau M, le terminal peut requérir en outre des informations relatives à ce sous réseau M auprès du sous réseau N auquel il a accès et plus précisément ici, via lequel il est en communication.

A cet effet, le terminal A émet un message 'MIH Info. Request (M)' 406 à destination de l'entité réseau du sous réseau N qui a en charge la communication 401 du terminal A. Il reçoit en réponse de cette entité un message 'MIH Info. Response (M)' 407 qui contient des informations relatives aux ressources dans le sous réseau M.

A ce stade, le terminal A stocke dans sa partie de couche protocolaire 20 ces informations relatives au sous réseau M.

Puis, le lien entre le sous réseau N et le terminal A subissant par la suite des dégradations, un message 408 de type évènement 'Link going down' est reçu au niveau du terminal A depuis le sous réseau N.

Sur réception de cette information, le terminal A se base sur les informations stockées dans sa partie de couche protocolaire 20 pour décider si il est préférable que sa communication 401 soit poursuivie via le terminal B et le sous réseau M. Lorsqu'il lui semble préférable d'opérer un tel transfert de sa communication, il émet à destination du terminal B un message 409 'MIH Resource Querry' visant à réserver des ressources dans le sous réseau M pour permettre à sa communication d'être poursuivie ultérieurement dans ce sous réseau M.

Le terminal B reçoit ce message 409 et le transmet à destination du sous réseau M. Puis, le sous réseau M répond à ce message 409 en émettant un message 410 'MIH Resource Response' qui transite via le terminal B jusqu'au terminal A.

Ensuite, une étape visant à authentifier le terminal A auprès du sous réseau M et une autre étape visant à l'y associer sont mises en oeuvre au travers d'un échange de messages 411 et d'un échange de messages 412 respectivement, ces échanges de messages transitant via le terminal B.

Puis, le lien requis entre le terminal B et le sous réseau M pour la communication du terminal A est détecté dans un état opérationnel et, de ce fait, un message 413 'Link Up' est alors émis depuis le sous réseau M vers le terminal B, qui, lui, le transmet au terminal A.

A ce stade, le sous réseau N déclenche un transfert effectif de la communication du terminal A 401 en émettant à destination du terminal A un message 414 'MIH Switch Request', auquel le terminal A répond par un message 415'MIH Switch Response'.

Le transfert de la communication est alors effectué et le sous réseau M émet un message 416 'MIH Handover Complete' à destination du sous réseau N.

Ainsi, la communication 401 du terminal A dans le sous réseau N est alors transférée en une communication 417 dans le sous réseau M via le terminal B.

Le sous réseau N émet alors un message 418 informant le terminal A que le lien avec lui est perdu 'Link Down'.

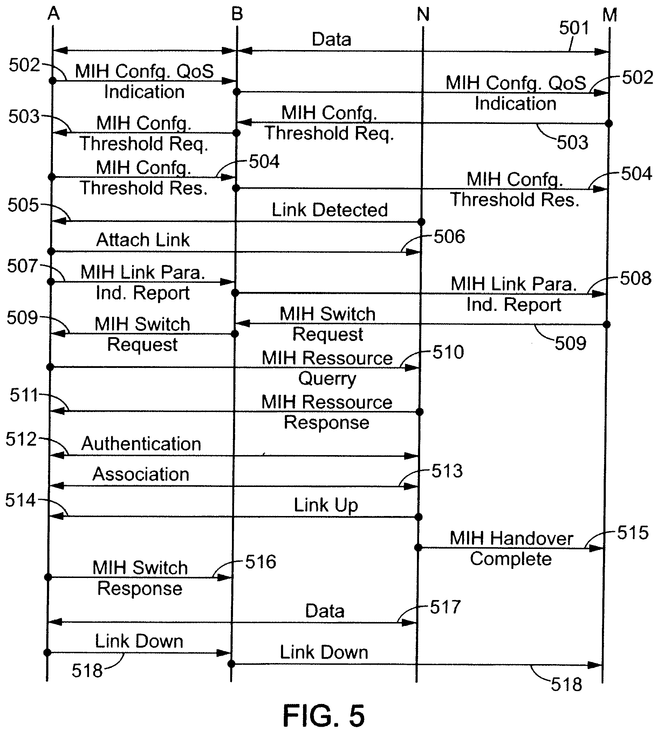

La figure 5 illustre un échange de messages selon un mode de réalisation de la présente invention au cours duquel un transfert de lien est mis en oeuvre vers une communication directe.

Dans l'exemple illustré ici, la communication du terminal A 501 transite via le terminal B jusqu'au sous réseau M.

Le terminal A émet à destination du terminal B un message 502 'MIH Confg. QoS Indication', ce message étant transféré jusqu'au sous réseau M. Il indique des informations relatives à un niveau de qualité de service (ou en anglais QoS) qui est souhaité pour la communication 501 en cours. Le sous réseau M est alors en mesure de configurer sur ce terminal A des valeurs seuil, qui sont déterminées sur la base du niveau de qualité de service indiqué dans le message 502. Afin de configurer le terminal A sur la base de ces valeurs seuil, le sous réseau M émet à destination du terminal A via le terminal B un message 503 'MIH Threshold Request'. Le terminal A y répond, via le terminal B, en émettant un message 504 'MIH Threshold Reponse'.

Ces valeurs seuil sont utilisées dans la gestion de la prise de décision relativement à un transfert de communication.

Puis, au cours de cette communication 501, le terminal A et le sous réseau sont aptes à communiquer entre eux, soit parce que le terminal A a changé de localisation, soit parce que le contexte radio entre l'entité réseau du sous réseau N et le terminal a été modifié.

Alors, le sous réseau N émet un message 505 'Link Detected' à destination du terminal A pour l'en informer. Le terminal A répond à cette information en émettant un message 506 'Link Attach' à destination du sous réseau N.

Le terminal A informe ensuite le sous réseau M via le terminal B relativement au niveau de qualité de service du lien qui est utilisé pour sa communication 501. A cet effet, il émet un message 507 'MIH Link Parameter Indication Report'.

Sur réception de ce dernier message, le sous réseau M est en mesure de décider si un transfert de communication du terminal A serait préférable ou non.

S'il est alors décidé de commander un tel transfert, le sous réseau M émet un message 509 'MIH Switch Request', ce message transitant par le terminal B avant d'être reçu par le terminal A. Sur réception de ce message 509, le terminal A prépare alors le transfert de sa communication 501 en réservant des ressources dans le sous réseau N en émettant à destination de ce dernier un message 510 'MIH Resource Querry'. Le sous réseau N y répond en émettant un message 511 'MIH Resource Response'.

Après cette phase de réservation de ressources dans le sous réseau N, qui lui est accessible directement depuis le terminal A, une étape d'authentification, suivie d'une étape d'association, sont mises en oeuvre par un échange de messages 511 et un échange de messages 512 respectivement, entre le terminal A et le sous réseau N.

Ensuite, le lien entre le terminal A et le sous réseau N est détecté comme étant opérationnel depuis le sous réseau N. Ce dernier en informe le terminal A par l'émission d'un message 514 'Link Up'. Puis, le sous réseau N informe alors le sous réseau M de la mise en oeuvre du transfert de la communication 501 en émettant à destination du sous réseau M un message 515 'MIH Handover Complete'.

Le terminal A émet ensuite un message 516 'MIH Switch Response' à destination du terminal B.

A ce stade, la communication 501 du terminal A via le terminal B par le sous réseau M est effectivement transférée vers le sous réseau N en tant que communication directe 517.

Le terminal A informe alors le sous réseau M sur le fait que le lien entre eux est perdu en émettant un message 518 'Link Down', via le terminal B.

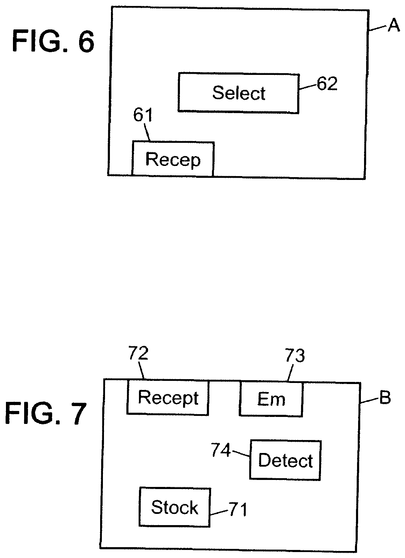

La figure 6 illustre un terminal selon un mode de réalisation de la présente invention. Ce terminal A est adapté pour utiliser un service de communication par l'intermédiaire d'un autre terminal. Il comprend une entité de réception 61 adaptée pour recevoir, depuis un autre terminal, des informations relatives à des ressources du ou des sous réseaux accessibles par l'autre terminal et une entité de sélection 62 adaptée pour sélectionner, sur la base de ces informations, un sous-réseau pour une communication parmi un ensemble de sous réseaux accessibles par l'autre terminal.

La figure 7 illustre un terminal selon un mode de réalisation de la présente invention. Ce terminal B est adapté pour permettre à un autre terminal une communication par son intermédiaire. Il comprend une entité de stockage 71 adaptée pour stocker des informations relatives à des ressources du ou des sous réseaux qui lui sont accessibles, une entité de réception 72 adaptée pour recevoir une requête depuis l'autre terminal demandant des informations relatives à des ressources du réseau hétérogène, et une entité d'émission 73 adaptée pour répondre en transmettant à l'autre terminal les informations relatives aux ressources du au moins un sous réseau accessible.

Il peut comprendre en outre une entité de détection 74 adaptée pour détecter la possibilité d'une communication avec l'autre terminal.

Le tableau suivant décrit différents points de référence, ou Reference Points, R1 à R6 tels que prévus dans la norme 802.21 IEEE.

| Point de référence | Description |
|---|---|
| R1 | C'est un point de référence situé entre la couche MIH d'un terminal et la couche MIH PoS (pour point de service) d'une entité de réseau correspondant au point d'accès. |
| R2 | C'est un point de référence situé entre la couche MIH d'un terminal et la couche MIH PoS d'une entité de réseau. |
| R3 | C'est un point de référence situé entre la couche MIH d'un terminal et la couche MIH PoS d'une entité de réseau qui n'est pas le point d'accès. |
| R4 | C'est un point de référence situé entre la couche MIH PoS d'une entité de réseau et la couche MIH non PoS d'une autre entité de réseau. |
| R5 | C'est un point de référence situé entre la couche MIH PoS d'une entité de réseau et la couche MIH PoS d'une autre entité de réseau |

Selon un mode de réalisation de la présente invention, on introduit avantageusement un nouveau point de référence R6 qui se situe entre la couche MIH d'un terminal et la couche MIH d'un autre terminal de sorte à permettre une communication entre deux terminaux et ainsi pouvoir mettre en oeuvre les principes de la présente invention.

## Revendications

1. Procédé de gestion d'une communication d'un premier terminal (A) dans un réseau de communication (10) comprenant des sous-réseaux (M, N) ; ledit premier terminal pouvant communiquer avec au moins un second terminal (B);
au moins un sous réseau (M) étant accessible via ledit second terminal ;
ledit procédé comprenant les étapes suivantes au niveau du premier terminal :
/a/ recevoir depuis le second terminal, des informations relatives à des ressources dudit sous réseau accessible via le second terminal ; et
/b/ sélectionner, sur la base desdites informations, un sous-réseau pour la communication du premier terminal parmi un ensemble de sous réseaux du réseau de communication comprenant au moins ledit sous réseau accessible via le second terminal.

2. Procédé de gestion selon la revendication 1, dans lequel le premier terminal (A) communique avec le second terminal (B) via au moins un troisième terminal (C), des informations échangées entre les premier et second terminaux transitant via au moins le troisième terminal.

3. Procédé de gestion d'une communication selon la revendication 1 ou 2, dans lequel l'ensemble de sous réseaux comprend un premier sous ensemble de sous réseaux (M) accessibles via le second terminal (B) et un second sous ensemble de sous réseaux (N) accessibles directement par le premier terminal (A) ; et
dans lequel les informations reçues par le premier terminal à l'étape /a/ sont relatives aux ressources respectives des sous réseaux du premier sous ensemble,
ledit procédé comprenant en outre l'étape suivante entre l'étape /a/ et l'étape /b/, au niveau du premier terminal :
- recevoir depuis le second sous ensemble, d'autres informations relatives à des ressources respectives des sous réseaux du second sous ensemble ;
dans lequel l'étape /b/ est effectuée sur la base en outre desdites autres informations.

4. Procédé de gestion d'une communication selon l'une quelconque des revendications précédentes, dans lequel la communication du premier terminal (A) est initialement établie via le sous-réseau sélectionné.

5. Procédé de gestion d'une communication selon l'une quelconque des revendications 1 à 3, dans lequel, un premier sous réseau étant accessible par le premier terminal, la communication est établie depuis ledit premier terminal par le premier sous réseau (N) du réseau ;
ledit procédé comprenant en outre les étapes suivantes, avant l'étape /a/, au niveau du premier terminal (A) :
/1/ recevoir, depuis le second terminal (B), un message (31) indiquant la possibilité d'une communication entre les premier et second terminaux ;
/2/ requérir auprès du second terminal, des informations relatives à des ressources du au moins un sous réseau accessible via le second terminal ;
et l'étape suivante après l'étape /b/ :
/3/ transférer la communication du premier terminal depuis le premier sous réseau vers le sous réseau sélectionné.

6. Procédé de gestion de communication selon l'une quelconque des revendications précédentes ;
dans lequel la communication est établie depuis le premier terminal (A) via le second terminal (B) par le au moins un sous réseau (M) accessible via le second terminal ;
ledit procédé comprenant les étapes suivantes au niveau du premier terminal (A):
/4/ recevoir, depuis le premier sous réseau (N), un message (405) indiquant la possibilité d'une communication entre le premier terminal et le premier sous réseau;
/5/ requérir auprès du premier sous réseau, des informations relatives à des ressources du premier sous réseau ;
dans lequel on décide de transférer la communication du premier terminal depuis le second sous réseau vers le premier sous réseau sur la base des informations requises à l'étape /5/.

7. Procédé de gestion de communication selon la revendication 1, dans lequel les informations relatives aux ressources indiquent un type d'accès ou une valeur de débit ou un niveau de charge relativement au sous réseau correspondant.

8. Procédé de gestion de communication selon la revendication 1, dans lequel les informations relatives à des ressources du au moins un sous réseau accessible via le second terminal sont stockées au niveau dudit second terminal.

9. Procédé de gestion d'une communication d'un premier terminal (A) dans un réseau de communication (10) comprenant des sous-réseaux (M,N) ; ledit premier terminal pouvant communiquer avec au moins un second terminal (B);
au moins un sous réseau (M) étant accessible via ledit second terminal ;
ledit procédé de gestion comprenant les étapes suivantes au niveau du second terminal :
/a/ recevoir une requête depuis le premier terminal demandant des informations relatives à des ressources du au moins un sous réseau accessible via le second terminal ;
/b/ répondre en transmettant au premier terminal lesdites informations relatives aux ressources du au moins un sous réseau accessible.

10. Procédé de gestion selon la revendication 9, dans lequel le premier terminal (A) communique avec le second terminal (B) via au moins un troisième terminal (C), des informations échangées entre les premier et second terminaux transitant via au moins le troisième terminal.

11. Procédé de gestion selon l'une quelconque des revendications 9 à 10, comprenant en outre les étapes suivantes au niveau du second terminal :
/i/ recevoir depuis le premier terminal une requête d'établissement d'une communication dans le au moins un sous réseau accessible ;
/ii/ gérer l'établissement de la communication du premier terminal dans le au moins un sous réseau accessible (M) via le second terminal.

12. Procédé de gestion selon l'une quelconque des revendications 9 à 11, dans lequel le second terminal met à jour les informations relatives aux ressources du au moins un sous réseau accessible sur la base de messages reçus depuis le au moins un sous réseau accessible.

13. Procédé de gestion selon l'une quelconque des revendications 9 à 12, dans lequel le second terminal (B) stocke localement des informations relatives à des ressources du au moins un sous réseau accessible.

14. Terminal (A) dans un réseau de communication (10) comprenant des sous-réseaux (M, N) ;
ledit terminal pouvant communiquer avec au moins un autre terminal (B) ;
au moins un sous réseau (M) étant accessible via ledit autre terminal ;
ledit terminal (A) comprenant :
- une entité de réception (61) adaptée pour recevoir depuis l'autre terminal, des informations relatives à des ressources dudit sous réseau accessible via l'autre terminal ; et
- une entité de sélection (62) adaptée pour sélectionner, sur la base desdites informations, un sous-réseau pour une communication parmi un ensemble de sous réseaux du réseau comprenant au moins ledit sous réseau accessible via l'autre terminal.

15. Terminal (B) dans un réseau de communication (10) comprenant des sous-réseaux (M,N) ;
ledit terminal pouvant communiquer avec au moins un autre terminal (A) ;
au moins un sous réseau (M) étant accessible via ledit terminal ;
ledit terminal comprenant :
- une entité de réception (72) adaptée pour recevoir une requête depuis l'autre terminal demandant des informations relatives à des ressources du au moins un sous réseau;
- une entité d'émission (73) adaptée pour répondre en transmettant à l'autre terminal lesdites informations relatives aux ressources du au moins un sous réseau accessible.

16. Terminal (B) selon la revendication 15, comprenant en outre une entité de stockage (71) adaptée pour stocker des informations relatives à des ressources du au moins un sous réseau accessible.

17. Réseau comprenant des sous réseaux (M ,N) ; un premier terminal (A) selon la revendication 14 et un second terminal (B) selon la revendication 15 ou 16.

## Patentansprüche

1. Verfahren zur Steuerung einer Kommunikation eines ersten Terminals (A) in einem Kommunikationsnetzwerk (10), umfassend Unternetzwerke (M, N); wobei das erste Terminal mit mindestens einem zweiten Terminal (B) kommunizieren kann;
wobei mindestens ein Unternetzwerk (M) über das zweite Terminal zugänglich ist;
wobei das Verfahren die folgenden Schritte im Bereich des ersten Terminals umfasst:
a) vom zweiten Terminal Erhalt von Informationen zu Ressourcen des Unternetzwerks, das über das zweite Terminal zugänglich ist; und
b) auf Basis der Informationen Auswahl eines Unternetzwerks für die Kommunikation des ersten Terminals unter einer Gesamtheit von Unternetzwerken des Kommunikationsnetzwerks, umfassend mindestens das Unternetzwerk, das über das zweite Terminal zugänglich ist.

2. Steuerungsverfahren nach Anspruch 1, bei dem das erste Terminal (A) mit dem zweiten Terminal (B) über mindestens ein drittes Terminal (C) kommuniziert, wobei zwischen dem ersten und dem zweiten Terminal ausgetauschte Informationen über mindestens das dritte Terminal laufen.

3. Verfahren zur Steuerung einer Kommunikation nach Anspruch 1 oder 2, bei dem die Gesamtheit von Unternetzwerken eine erste Untereinheit von Unternetzwerken (M), die über das zweite Terminal (B) zugänglich sind, und eine zweite Untereinheit von Unternetzwerken (N), die direkt vom ersten Terminal (A) zugänglich sind, umfasst; und
bei dem die von dem ersten Terminal in Schritt a) erhaltenen Informationen mit den jeweiligen Ressourcen der Unternetzwerke der ersten Untereinheit in Zusammenhang stehen,
wobei das Verfahren ferner den folgenden Schritt zwischen dem Schritt a) und dem Schritt b) im Bereich des ersten Terminals umfasst:
- von der zweiten Untereinheit Erhalt von weiteren Informationen zu jeweiligen Ressourcen der Unternetzwerke der zweiten Untereinheit;
wobei der Schritt b) ferner auf Basis der weiteren Informationen ausgeführt wird.

4. Verfahren zur Steuerung einer Kommunikation nach einem der vorhergehenden Ansprüche, bei dem die Kommunikation des ersten Terminals (A) ursprünglich über das ausgewählte Unternetzwerk hergestellt wird.

5. Verfahren zur Steuerung einer Kommunikation nach einem der Ansprüche 1 bis 3, bei dem ein erstes Unternetzwerk durch das erste Terminal zugänglich ist, die Kommunikation vom ersten Terminal durch das erste Unternetzwerk (N) des Netzwerks hergestellt wird,
wobei das Verfahren ferner die folgenden Schritte vor dem Schritt a) im Bereich des ersten Terminals (A) umfasst:
1) vom zweiten Terminal (B) Erhalt einer Meldung (31), die die Möglichkeit einer Kommunikation zwischen dem ersten und zweiten Terminal anzeigt;
2) beim zweiten Terminal Anforderung von Informationen zu Ressourcen des mindestens einen Unternetzwerks, das über das zweite Terminal zugänglich ist;
und den folgenden Schritt nach Schritt b):
3) Übertragung der Kommunikation des ersten Terminals vom ersten Unternetzwerk auf das ausgewählte Unternetzwerk.

6. Verfahren zur Steuerung einer Kommunikation nach einem der vorhergehenden Ansprüche,
bei dem die Kommunikation vom ersten Terminal (A) über das zweite Terminal (B) durch das mindestens eine Unternetzwerk (M), das über das zweite Terminal zugänglich ist, hergestellt wird;
wobei das Verfahren die folgenden Schritte im Bereich des ersten Terminals (A) umfasst:
4) vom ersten Unternetzwerk (N) Erhalt einer Meldung (405), die die Möglichkeit einer Kommunikation zwischen dem ersten Terminal und dem ersten Unternetzwerk anzeigt;
5) beim ersten Unternetzwerk Anforderung von Informationen zu Ressourcen des ersten Unternetzwerks,
wobei auf Basis der in Schritt 5) angeforderten Informationen beschlossen wird, die Kommunikation des ersten Terminals vom zweiten Unternetzwerk zum ersten Unternetzwerk zu übertragen.

7. Verfahren zur Steuerung einer Kommunikation nach Anspruch 1, bei dem die Informationen zu den Ressourcen einen Zugangstyp oder einen Mengenwert oder ein Ladeniveau in Bezug auf das entsprechende Unternetzwerk angeben.

8. Verfahren zur Steuerung einer Kommunikation nach Anspruch 1, bei dem die Informationen zu Ressourcen des mindestens einen Unternetzwerks, das über das zweite Terminal zugänglich ist, im Bereich des zweiten Terminals gespeichert sind.

9. Verfahren zur Steuerung einer Kommunikation eines ersten Terminals (A) in einem Kommunikationsnetzwerk (10), umfassend Unternetzwerke (M, N); wobei das erste Terminal mit mindestens einem zweiten Terminal (B) kommunizieren kann;
wobei mindestens ein Unternetzwerk (M) über das zweite Terminal zugänglich ist;
wobei das Steuerungsverfahren die folgenden Schritte im Bereich des zweiten Terminals umfasst:
a) Erhalt einer Anfrage vom ersten Terminal, in der Informationen zu Ressourcen des mindestens einen Unternetzwerks, das über das zweite Terminal zugänglich ist, angefordert werden;
b) Antwort, wobei an das erste Terminal die Informationen zu den Ressourcen des mindestens einen zugänglichen Unternetzwerks übertragen werden.

10. Steuerungsverfahren nach Anspruch 9, bei dem das erste Terminal (A) mit dem zweiten Terminal (B) über mindestens ein drittes Terminal (C) kommuniziert, wobei zwischen dem ersten und zweiten Terminal ausgetauschte Informationen mindestens über das dritte Terminal laufen.

11. Steuerungsverfahren nach einem der Ansprüche 9 bis 10, ferner umfassend die folgenden Schritte im Bereich des zweiten Terminals:
i) vom ersten Terminal Erhalt einer Anforderung der Herstellung einer Kommunikation in dem mindestens einen zugänglichen Unternetzwerk;
ii) Steuerung der Herstellung der Kommunikation des ersten Terminals in dem mindestens einen über das zweite Terminal zugänglichen Unternetzwerk (M).

12. Steuerungsverfahren nach einem der Ansprüche 9 bis 11, bei dem das zweite Terminal die Informationen zu den Ressourcen des mindestens einen zugänglichen Unternetzwerks auf Basis der von dem mindestens einen zugänglichen Unternetzwerk erhaltenen Meldungen aktualisiert.

13. Steuerungsverfahren nach einem der Ansprüche 9 bis 12, bei dem das zweite Terminal (B) lokal Informationen zu Ressourcen des mindestens einen zugänglichen Unternetzwerks speichert.

14. Terminal (A) in einem Kommunikationsnetzwerk (10), umfassend Unternetzwerke (M, N);
wobei das Terminal mit mindestens einem anderen Terminal (B) kommunizieren kann;
wobei mindestens ein Unternetzwerk (M) über das andere Terminal zugänglich ist;
wobei das Terminal (A) umfasst:
- eine Empfangseinheit (61), die dazu vorgesehen ist, von dem anderen Terminal Informationen zu Ressourcen des Unternetzwerks, das über das andere Terminal zugänglich ist, zu erhalten; und
- eine Auswahleinheit (62), die dazu vorgesehen ist, auf Basis der Informationen ein Unternetzwerk für eine Kommunikation unter einer Gesamtheit von Unternetzwerken des Netzwerks, umfassend mindestens das Unternetzwerk, das über das andere Terminal zugänglich ist, auszuwählen.

15. Terminal (B) in einem Kommunikationsnetzwerk (10), umfassend Unternetzwerke (M, N);
wobei das Terminal mit mindestens einem anderen Terminal (A) kommunizieren kann;
wobei mindestens ein Unternetzwerk (M) über das Terminal zugänglich ist;
wobei das Terminal umfasst:
- eine Empfangseinheit (72), die dazu vorgesehen ist, eine Anfrage von einem anderen Terminal zu erhalten, die Informationen zu Ressourcen des mindestens einen Unternetzwerks anfordert;
- eine Sendeeinheit (73), die dazu vorgesehen ist zu antworten, wobei an das andere Terminal die Informationen zu den Ressourcen des mindestens einen zugänglichen Unternetzwerks übertragen werden.

16. Terminal (B) nach Anspruch 15, ferner umfassend eine Speichereinheit (71), die dazu vorgesehen ist, Informationen zu Ressourcen des mindestens einen zugänglichen Unternetzwerks zu speichern.

17. Netzwerk, umfassend Unternetzwerke (M, N); ein erstes Terminal (A) nach Anspruch 14 und ein zweites Terminal (B) nach Anspruch 15 oder 16.

## Claims

1. Method for managing a communication of a first terminal (A) in a communication network (10) comprising subnetworks (M, N), said first terminal being capable of communicating with at least one second terminal (B), at least one subnetwork (M) being accessible via said second terminal,
said method comprising the following steps at the first terminal:
/a/ receiving from the second terminal data relating to the resources of said subnetwork accessible via the second terminal; and
/b/ selecting, on the basis of said data, a subnetwork for the communication of the first terminal from a group of subnetworks of the communication network comprising at least said subnetwork accessible via the second terminal.

2. Management method according to Claim 1, wherein the first terminal (A) communicates with the second terminal (B) via at least a third terminal (C), data exchanged between the first and second terminals transiting via at least the third terminal.

3. Method for managing a communication according to Claim 1 or 2, wherein the group of subnetworks comprises a first sub-set of subnetworks (M) accessible via the second terminal (B) and a second sub-set of subnetworks (N) accessible directly by the first terminal (A), and
wherein the data received by the first terminal at step /a/ is related to the respective resources of the subnetworks of the first sub-set,
said method further comprising the following step between step /a/ and step /b/, at the first terminal:
receiving from the second sub-set other data relating to respective resources of the subnetworks of the second sub-set,
wherein the step /b/ is further implemented on the basis of said other data.

4. Method for managing a communication according to any one of the preceding claims, wherein the communication of the first terminal (A) is set up initially via the selected subnetwork.

5. Method for managing a communication according to any one of Claims 1 to 3, wherein, a first subnetwork being accessible by the first terminal, the communication is set up from said first terminal by the first subnetwork (N) of the network,
said method further comprising the following steps, before step /a/, at the first terminal (A):
/1/ receiving, from the second terminal (B), a message (31) indicating the possibility of a communication between the first and second terminals;
/2/ requesting from the second terminal data relating to resources of the at least one subnetwork accessible via the second terminal;
and the following step after step /b/:
/3/ transferring the communication of the first terminal from the first subnetwork to the selected subnetwork.

6. Method for managing a communication according to any one of the preceding claims, wherein the communication is set up from the first terminal (A) via the second terminal (B) by the at least one subnetwork (M) accessible via the second terminal, said method comprising the following steps at the first terminal (A):
/4/ receiving, from the first subnetwork (N), a message (405) indicating the possibility of a communication between the first terminal and the first subnetwork;
/5/ requesting from the first subnetwork data relating to resources of the first subnetwork,
wherein it is decided to transfer the communication of the first terminal from the second subnetwork to the first subnetwork on the basis of the data requested at step /5/.

7. Method for managing a communication according to Claim 1, wherein the data relating to resources indicate a type of access or a throughput value or a level of loading relatively to the corresponding subnetwork.

8. Method for managing a communication according to Claim 1, wherein the data relating to resources of the at least one subnetwork accessible via the second terminal is stored at said second terminal.

9. Method for managing a communication of a first terminal (A) in a communication network (10) comprising subnetworks (M, N), said first terminal being able to communicate with at least one second terminal (B),
at least one subnetwork (M) being accessible via said second terminal,
said management method comprising the following steps at the second terminal:
/a/ receiving a request from the first terminal requesting data relating to resources of the at least one subnetwork accessible via the second terminal;
/b/ responding by sending to the first terminal said data relating to resources of the at least one accessible subnetwork.

10. Management method according to Claim 9, wherein the first terminal (A) communicates with the second terminal (B) via at least a third terminal (C), data exchanged between the first and second terminals transiting via at least the third terminal.

11. Management method according to either one of Claims 9 or 10, further comprising the following steps at the second terminal:
/i/ receiving from the first terminal a request to set up a communication in the at least one accessible subnetwork;
/ii/ managing the set-up of the communication of the first terminal in the at least one subnetwork (M) accessible via the second terminal.

12. Management method according to any one of Claims 9 to 11, wherein the second terminal updates the data relating to the resources of the at least one accessible subnetwork on the basis of messages received from the at least one accessible subnetwork.

13. Management method according to any one of Claims 9 to 12, wherein the second terminal (B) stores locally data relating to resources of the at least one accessible subnetwork.

14. Terminal (A) in a communication network (10) comprising subnetworks (M, N),
said terminal being capable of communicating with at least one other terminal (B),
at least one subnetwork (M) being accessible via said other terminal,
said terminal (A) comprising:
- a reception entity (61) adapted to receive from the other terminal data relating to resources of said subnetwork accessible via the other terminal; and
- a selection entity (62) adapted to select, on the basis of said data, a subnetwork for a communication from a set of subnetworks of the network comprising at least said subnetwork accessible via the other terminal.

15. Terminal (B) in a communication network (10) comprising subnetworks (M, N),
said terminal being capable of communicating with at least one other terminal (A),
at least one subnetwork (M) being accessible via said terminal,
said terminal comprising:
- a reception entity (72) adapted to receive a request from the other terminal requesting data relating to the resources of the at least one subnetwork;
- a sending entity (73) adapted to respond by transmitting to the other terminal said data relating to the resources of the at least one accessible subnetwork.

16. Terminal (B) according to Claim 15, further comprising a storage entity (71) adapted to store data relating to resources of the at least one accessible subnetwork.

17. Network comprising subnetworks (M, N), a first terminal (A) according to Claim 14 and a second terminal (B) according to Claim 15 or 16.
